# EUROPEAN PATENT APPLICATION

(11) **EP 4 231 719 A1**
(43) Date of publication of application: **23.08.2023**
(21) Application number: 21879432.9
(22) Date of filing: 13.10.2021
(51) Int. Cl.: H04W 52/02

(54) **RESOURCE PROCESSING METHOD AND APPARATUS, AND ELECTRONIC DEVICE**

(30) Priority: 15.10.2020 CN 202011105271
(71) Applicant: Vivo Mobile Communication Co., Ltd., Dongguan, Guangdong 523863 (CN)
(72) Inventor: PENG, Shuyan, Dongguan, Guangdong 523863 (CN); JI, Zichao, Dongguan, Guangdong 523863 (CN); WANG, Huan, Dongguan, Guangdong 523863 (CN); LIU, Siqi, Dongguan, Guangdong 523863 (CN)
(74) Representative: Murgitroyd & Company
(86) International application number: PCT/CN2021/123538
(87) International publication number: WO 2022/078389

(57) **Abstract**

This application discloses a resource processing method and apparatus, and an electronic device, and belongs to the technical field of communications. The resource processing method includes: performing detection by a terminal in a first frequency domain range, and performing resource selection in the first frequency domain range or a second frequency domain range based on a detection result.

## Description

### CROSS-REFERENCE TO RELATED APPLICATIONS

This application claims the priority of Chinese Patent Application No. 202011105271.5 filed in China on October 15, 2020, the entire content of which is herein incorporated by reference.

### TECHNICAL FIELD

This application relates to the technical field of communications, and in particular to a resource processing method and apparatus, and an electronic device.

### BACKGROUND

According to the existing sidelink technology, in the frequency domain, the terminal performs detection in the whole frequency domain range of a configured resource pool. The radio frequency (Radio Frequency, RF) bandwidth of the terminal is at least the size of the frequency domain range of the configured resource pool, and the detection or sensing (when the blind detection capability is not exceeded) in a physical sidelink control channel (physical sidelink control channel, PSCCH) is performed in each sub-channel of the frequency domain bandwidth of the configured transmission resource pool. The existing method can lead to high power consumption of the terminal.

### SUMMARY

The embodiments of this application provide a resource processing method and apparatus, and an electronic device, which can reduce the energy overhead of resource detection by a terminal, improve the accuracy of detection results and reduce collision probability.

In a first aspect, this embodiment of this application provides a resource processing method. The method includes:
performing detection by a terminal in a first frequency domain range, and performing resource selection in the first frequency domain range or a second frequency domain range based on a detection result.

In a second aspect, this embodiment of this application provides a resource processing method. The method includes:
transmitting, by a terminal, information or channels in a first frequency domain range or a second frequency domain range or a third frequency domain range, the third frequency domain range being less than or greater than the first frequency domain range, or the third frequency domain range being less than or greater than the second frequency domain range.

In a third aspect, this embodiment of this application provides a resource processing method. The method includes:
transmitting, by a terminal, configuration information or control information in a first frequency domain range in a case that a frequency domain range of resources reserved by the terminal overlaps with the first frequency domain range.

In a fourth aspect, this embodiment of this application provides a resource processing method. The method includes:
indicating, by a network-side device, a terminal to transmit configuration information or control information in a first frequency domain range in a case that a frequency domain range of resources reserved or scheduled by the network-side device overlaps with the first frequency domain range.

In a fifth aspect, this embodiment of this application provides a resource processing apparatus. The apparatus includes:
a processing module, configured to perform detection in a first frequency domain range, and perform resource selection in the first frequency domain range and a second frequency domain range based on a detection result.

In a sixth aspect, this embodiment of this application provides a resource processing apparatus. The apparatus includes:
a first transmitting module, configured to transmit information or channels in a first frequency domain range or a second frequency domain range or a third frequency domain range, the third frequency domain range being less than or greater than the first frequency domain range, or the third frequency domain range being less than or greater than the second frequency domain range.

In a seventh aspect, this embodiment of this application provides a resource processing apparatus. The apparatus includes:
a second transmitting module, configured to transmit, by a terminal, configuration information or control information in a first frequency domain range in a case that a frequency domain range of resources reserved by the terminal overlaps with the first frequency domain range.

In an eighth aspect, this embodiment of this application provides a resource processing apparatus. The apparatus includes:
a third transmitting module, configured to indicate a terminal to transmit configuration information or control information in a first frequency domain range in a case that a frequency domain range of resources reserved or scheduled by a network-side device overlaps with the first frequency domain range.

In a ninth aspect, this embodiment of this application further provides an electronic device, which includes a processor, a memory and a program or an instruction stored in the memory and executable on the processor. When the program or the instruction is executed by the processor, the steps of the method as described above are implemented.

In a tenth aspect, this embodiment of this application provides a readable storage medium storing a program or an instruction. When the program or instruction is executed by the processor, the steps of the method as described above are implemented.

In an eleventh aspect, this embodiment of this application provides a chip. The chip includes a processor and a communication interface, where the communication interface is coupled with the processor, and the processor is configured to run programs or instructions to implement the method as described in the first aspect or the second aspect or the third aspect or the fourth aspect.

In a twelfth aspect, a computer program product is provided and stored in a nonvolatile storage medium. The computer program product is executed by at least one processor to implement the method as described in the first aspect or the second aspect or the third aspect or the fourth aspect.

In this embodiment of this application, the terminal that needs to save power may perform detection in the preset first frequency domain range, and performs resource selection in the preset first frequency domain range or a second frequency domain range based on the detection result, so that the power consumption of the terminal can be reduced, and meanwhile the detection performance can also be guaranteed.

### BRIEF DESCRIPTION OF THE DRAWINGS

To describe the technical solutions of the embodiments of this application more clearly, the following briefly introduces the accompanying drawings required for describing the embodiments of this application. Apparently, the accompanying drawings in the following description show only some embodiments of this application, and a person of ordinary skill in the art may still derive other drawings from these accompanying drawings without creative efforts.
FIG. 1 shows a schematic diagram of a wireless communication system.
FIG. 2 shows a schematic flowchart of resource detection, resource selection and reselection.
FIG. 3 shows a schematic definition diagram of a window.
FIG. 4 shows a schematic diagram of performing partial detection.
FIG. 5 to FIG. 8 show schematic flowcharts of a resource processing method according to this embodiment of this application.
FIG. 9 shows a schematic diagram of performing resource detection in the frequency domain range of part of detection windows according to a specific embodiment of this application.
FIG. 10 shows a schematic diagram of performing resource detection and resource selection in the frequency domain range of part of detection windows according to a specific embodiment of this application.
FIG. 11 shows a schematic diagram of a selectable resource range for a PSFCH of a configuration terminal 2 according to a specific embodiment of this application.
FIG. 12 to FIG. 15 show structural schematic diagrams of a resource processing apparatus according to an embodiment of this application.
FIG. 16 shows a schematic composition diagram of the terminal according to an embodiment of this application.
FIG. 17 shows a schematic composition diagram of a network-side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the protection scope of this application.

The terms "first", "second", and the like in the description and claims of this application are used to distinguish similar objects and are not used to describe a specific sequence or a precedence order. It is to be understood that such used data is interchangeable under appropriate conditions, so that the embodiments of this application can be implemented in an order other than those illustrated or described here. In addition, "and/or" in the description and claims indicates at least one of connected objects, and the character "/" generally indicates that the contextual objects are in an "or" relationship.

The technologies described herein are not limited to long term evolution (Long Term Evolution, LTE)/LTE-Advanced (LTE-Advanced, LTE-A) systems, and can also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA) and other systems. Terms "system" and "network" are often used interchangeably. The CDMA system can realize radio technologies such as CDMA2000 and universal terrestrial radio access (Universal Terrestrial Radio Access, UTRA). The UTRA includes wideband CDMA (Wideband Code Division Multiple Access, WCDMA) and other CDMA (CDMA) variants. A TDMA system can realize radio technologies such as a global system for mobile communication (Global System for Mobile Communication, GSM). An OFDMA system can realize radio technologies such as ultramobile broadband (UltraMobile Broadband, UMB), evolution-UTRA (Evolution-UTRA, E-UTRA), IEEE 802.11 (Wi-Fi), IEEE 802.16 (WiMAX), IEEE 802.20, Flash-OFDM. UTRA and E-UTRA are parts of a universal mobile telecommunications system (Universal Mobile Telecommunications System, UMTS). LTE and more advanced LTE (such as LTE-A) are new UMTS versions using E-UTRA. UTRA, E-UTRA, UMTS, LTE, LTE-A and GSM are described in the literature from the organization named "3rd generation partnership project" (3rd Generation Partnership Project, 3GPP). CDMA2000 and UMB are described in the literature from the organization named "3rd generation partnership project 2" (3GPP2). The technology described herein can be used for both the above-mentioned systems and radio technologies, as well as other systems and radio technologies. However, an NR system is described below for example purposes, and NR terminologies are used in most of the following descriptions although these technologies can also be applied to applications other than NR system applications.

The following description provides examples without limiting the scope, applicability or configuration set forth in the claims. Changes may be made in the function and arrangement of the elements discussed without departing from the spirit and scope of the present disclosure. Various procedures or components may be omitted, replaced, or added in each example. For example, described methods may be performed in a sequence different from a sequence described, and various steps may be added, omitted, or combined. In addition, features described with reference to some examples can be combined in other examples.

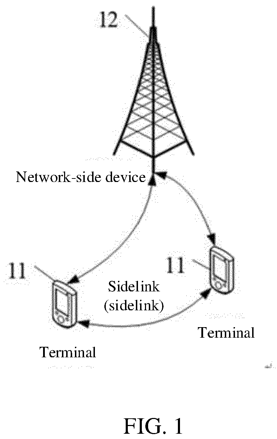

Referring to FIG. 1, FIG. 1 shows a block diagram of a wireless communication system which can be applied by an embodiment of this application. The wireless communication system includes a terminal 11 and a network-side device 12. The terminal 11 may also be called a terminal device or user equipment (User Equipment, UE). The terminal 11 may be a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device) or an on-board device and other terminal side devices. It should be noted that the specific type of the terminal 11 is not limited in this embodiment of this application. The network-side device 12 may be a base station or a core network. The base station may be a base station of 5G and later versions (such as gNB, 5G NR NB, etc.), or a base station in other communication systems (such as eNB, a WLAN access point, or other access points, etc.), or a location server (such as E-SMLC or LMF (Location Manager Function)). The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home node B, a home evolved NodeB, a WLAN access point, a WiFi node or some other appropriate terminologies in the art. As long as the same technical effect is achieved, the base station is not limited to specific technical vocabulary. It should be noted that in this embodiment of this application, only the base station in the NR system is taken as an example, but this embodiment of this application does not limit the specific type and the specific communication system of the base station.

As shown in FIG. 1, sidelink (sidelink, SL) transmission, that is, data transmission is directly carried out between terminals (User Equipment, UE). The LTE sidelink performs communication based on broadcast, can be used to support basic safety communication of vehicle to everything (vehicle to everything, V2X), but is not suitable for other advanced V2X services. A new radio (New Radio, NR) system supports more advanced sidelink transmission design, such as unicast, multicast or group broadcast, and thus, can support more comprehensive service types.

There are two ways to allocate SL resources, one way is based on base station scheduling (mode 1), and the other way is based on terminal autonomous resource processing (mode 2). As for resource allocation modes scheduled by the base station, sidelink resources of the UE for data transmission are determined by the base station and notified to a transmitting terminal (TX UE) through a downlink signal. For a resource allocation mode selected by the UE independently, the UE selects available transmission resources from a configured (pre-configured) resource pool, conducts channel monitoring before resource processing, selects a resource set with less interference according to channel monitoring results, and then randomly selects resources for transmission from the resource set. At this time, the resource information may come from broadcast messages of the base station or pre-configured information. If the UE works in the range of the base station and is in radio resource control (Radio Resource Control, RRC) connection with the base station, mode 1 and/or mode 2 may be adopted. If the UE works in the range of the base station, but is not in RRC connection with the base station, the UE can only work in mode 2. If the UE is out of the range of the base station, the UE can only work in mode 2 and performs SL transmission according to the pre-configured information.

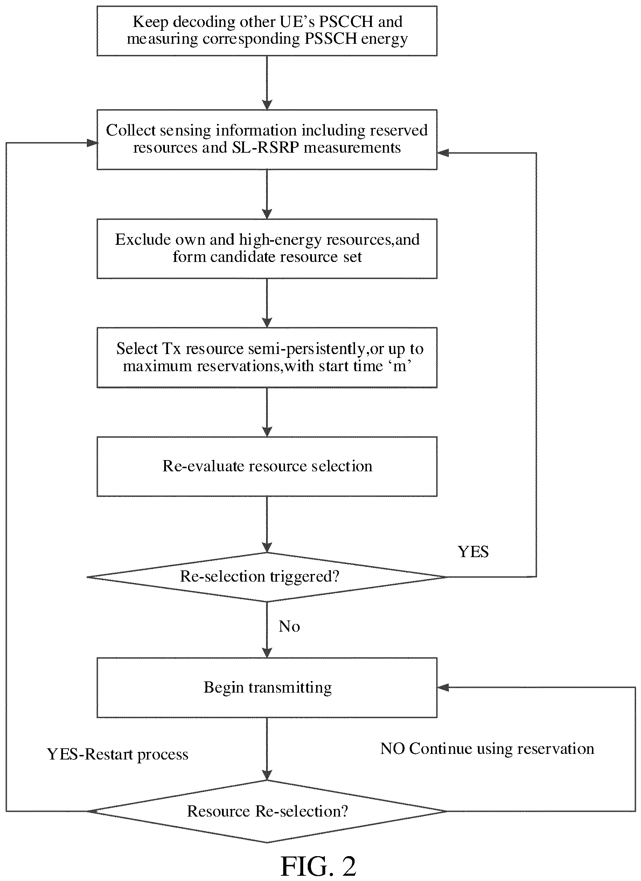

For mode 2, a specific working mode is described as follows.
1) After resource processing is triggered, TX UE first determines a resource processing window. The lower boundary of the resource processing window is at time T1 after the resource processing is triggered, and the upper boundary of the resource processing window is at time T2 after the resource processing is triggered.
   T2 is a value selected by the UE within the data delay (packet delay budget, PDB) transmitted by a transport block (Transport Block, TB) thereof, and T2 is not earlier than T1.
2) Before resource processing, the UE needs to determine a candidate resource set (candidate resource set) for resource processing, the measured value of the reference signal receiving power (Reference Signal Receiving Power, RSRP) on a resource in the resource processing window is compared with a corresponding RSRP threshold (threshold) (the RSRP and the RSRP threshold are not directly measured on the resource in the resource processing window, but are determined according to sensing (sensing) results), and if the RSRP is higher than the RSRP threshold, the resource is excluded and cannot be included in the candidate resource set. After the resource is excluded, the remaining resources in the resource processing window form the candidate resource set. If the RSRP is lower than the RSRP threshold, the resource can be included in the candidate resource set. After the resource set is determined, the UE randomly selects transmission resources in the candidate resource set. In addition, the UE can reserve transmission resources for the next transmission in this transmission. The specific flow is shown in FIG. 2.

In NR, the terminal performs detection in the frequency domain bandwidth of the allocated whole resource pool in each time slot. According to the defined detection capability, the number of detection attempts does not exceed the detection capability of the terminal.

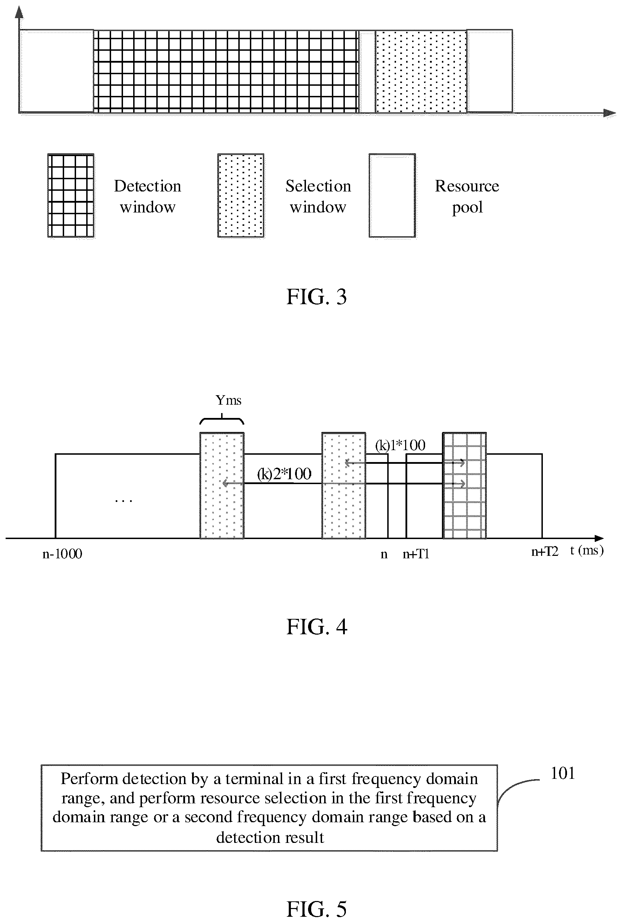

FIG. 3 is the definition of the window.

Partial detection in LTE V2X is mainly designed to save power, and partial detection in time domain is defined. The UE supports two resource selection modes. One resource selection mode is a random resource selection mode; and according to the other mode, partial detection is performed first, resources are selected based on the results of the partial detection, semi-static resource reservation is performed. The UE chooses which mode is configured by RRC. When RRC is configured to support resource selection of the two modes, the UE determines which resource selection mode is adopted.

Specifically, the way that the terminal performs partial detection and resource detection is shown in FIG. 4.

The detection window of the UE is the window of a point packing part in the range of [n-1000, n], the lengths *Y* and *k* are parameters configured by RRC, and the value range of *k* may be {1, 2, 3, ..., 10}. A window of a lattice packing part in the range of [n+T1, n+T2] in a selection window is the selection window of the UE configured by the high layer. The UE detects sidelink control information (Sidelink Control Information, SCI) transmitted by other terminals in the detection window of the point packing part, and infers the resource reservation condition of other terminals in the window of the lattice packing part according to the detected SCI and the reservation period. The UE can exclude resources that do not meet the conditions in the selection window according to the information. At least 20% of the remaining resources (20% of the window length *Y*) are selected as the candidate resource set and reported to a media access control (MAC) layer, and the MAC layer randomly selects one resource from the candidate resource set as the candidate resource of the UE. The UE reserves the selected resources periodically, and the reserved period is indicated in SCI.

In the frequency domain range, the power consumption of the terminal is related to the bandwidth requiring to be supported by RF on terminal hardware. The wider the RF bandwidth supported by the terminal, the greater the power consumption. Conversely, the smaller the supported bandwidth, the less the power consumption.

At the same time, the power consumption of the terminal is also related to the number of times the terminal detects PSCCH in the frequency domain. The more times the terminal blindly detects PSCCH in the frequency domain, the greater the power consumption. The less times the terminal blindly detects PSCCH, the less the power consumption.

According to the existing SL technology, in the frequency domain, the terminal needs to perform detection in the frequency domain range of a configured resource pool. The RF bandwidth of the terminal is at least the size of the frequency domain range of the configured resource pool, and PSCCH detection (when the blind detection capability is not exceeded) is performed in each sub-channel of the frequency domain bandwidth of the configured transmission resource pool, resulting in high power consumption of the terminal.

This embodiment of this application provides a resource processing method. As shown in FIG. 5, the method includes:
step 101: performing detection by a terminal in a first frequency domain range, and performing resource selection in the first frequency domain range or a second frequency domain range based on a detection result.

The terminal can perform detection in the first frequency domain range, and then performs resource selection in the second frequency domain range based on a detection result; or the terminal performs detection in the first frequency domain range, and then performs resource selection in the first frequency domain range.

Detection may also be expressed as sensing resources. Performing resource selection in the first frequency domain ranged may also be considered that resources determined by the terminal are located within the first frequency domain range. Performing resource selection in the second frequency domain range may also be considered that resources determined by the terminal are located within the second frequency domain range.

The terminal may be a terminal that needs to save power. The first frequency domain range is a limited frequency domain range. The first frequency domain range may be one or more ranges. The second frequency domain range may be one or more ranges.

In this embodiment of this application, the terminal that needs to save power may perform detection in the preset or indicated first frequency domain range, and performs resource selection in the preset or indicated first frequency domain range or a second frequency domain range based on the detection result, so that the power consumption of the terminal can be saved, and meanwhile the detection performance can also be guaranteed.

The first frequency domain range may be pre-defined by a protocol or configured by a control node or pre-configured by the control node or configured by a terminal or pre-configured by a terminal. The terminal may be a transmitting terminal, a receiving terminal or a control terminal.

In some embodiments, the control node may be a network-side device, and may also be a roadside unit, and a terminal side device. These terminal devices may be terminal side devices with certain scheduling functions. When the first frequency domain range is configured, it may be a parameter configured by a radio resource control (RRC) message, a media access control-control element (MAC CE) signal, downlink control information (DCI) or sidelink control information (SCI).

In some embodiments, the first frequency domain range satisfies at least one of the following.

The size and/or the location of the first frequency domain range is related to the location of a time domain unit and/or the index of time domain resources. For example, the relationship between the frequency domain detection location and the time slot index (index) is configured. If the frequency domain is divided into 2 frequency domain subsets, the time slot index mode 2 may be used as the detection range of the first frequency domain range on the time slot;

The size and/or the location of the first frequency domain range is related to the radio resource control (RRC) configuration of the detection window. The detection window may be the whole detection window or part of the detection window. The detection window may be a continuous detection window or a discontinuous detection window. For example: the frequency domain locations of different sub-detection windows with the RRC configuration of 1 may be different frequency domain locations, so as to make detection results exist in as many frequency domain ranges as possible.

A lowest sub-channel within the first frequency domain range is a lowest sub-channel of a resource pool.

A highest sub-channel within the first frequency domain range is a highest sub-channel of the resource pool.

A lowest physical resource block (PRB) of the lowest sub-channel within the first frequency domain range is a lowest PRB of the lowest sub-channel of the resource pool.

A highest PRB of the highest sub-channel within the first frequency domain range is a highest PRB of the highest sub-channel of the resource pool.

The size of the first frequency domain range is scaling of the frequency domain range size of the resource pool, the scaling factor is *M* being greater than 0. *M* may be an integer or a decimal. When *M* is a decimal, reduction is achieved on the basis of the size of the frequency domain range of the resource pool. When *M* is an integer greater than 1, enlargement is achieved on the basis of the size of the frequency domain range of the resource pool.

In some embodiments, the first frequency domain range is configured for at least one of the following granularities:
per resource pool (per resource pool);
per terminal (per UE);
per channel busy rate (per CBR);
per channel occupancy ratio (per CR); and
per quality of service (per QoS).

In some embodiments, the method further includes:
obtaining a corresponding relationship between the first frequency domain range and at least one of the following:
CR;
CBR;
QoS;
transmission types, including unicast, group broadcast, and broadcast, where the group broadcast may be further distinguished into different group broadcast types, which are a group broadcast type 1 and a group broadcast type 2; the group broadcast type 1 and the group broadcast type 2 correspond to different feedback modes or feedback contents, or different contents of control information, or different formats of control information;
service type;
source address; and
target address.

In some embodiments, the corresponding relationship is pre-defined by the protocol or configured by the control node or pre-configured by the control node or configured by a terminal or pre-configured by a terminal.

In some embodiments, the second frequency domain range is pre-defined by the protocol or configured by the control node or pre-configured by the control node or configured by a terminal or pre-configured by a terminal. The terminal may be a transmitting terminal, a receiving terminal or a control terminal.

In some embodiments, the control node may be a network-side device, and may also be a roadside unit, and a terminal side device. These terminal devices may be terminal side devices with certain scheduling functions. The configuration information may be carried by signals in RRC signals, MAC CE signals and DCI signals. When information is configured by the terminal side device, the configuration information may be carried by the RRC signals and/or the SCI signals.

In some embodiments, the second frequency domain range satisfies at least one of the following:
the second frequency domain range is related to the first frequency domain range;
the second frequency domain range is equal to one or more resource pools of the terminal, and the one or more resource pools are pre-defined by a protocol or configured by a control node or pre-configured by the control node or configured by a terminal or pre-configured by a terminal; and
the second frequency domain range is obtained according to a preset rule, and the preset rule is pre-defined by a protocol or configured by a control node or pre-configured by the control node or configured by a terminal or pre-configured by a terminal.

In some embodiments, the second frequency domain range is the same as the first frequency domain range, that is, the size and the location of the second frequency domain range are the same as the size and the location of the first frequency domain range, so that the terminal only expects to open the radio frequency within the first frequency domain range (that is, one frequency domain range), which can save power; or
the second frequency domain range is of a size of the frequency domain range obtained by scaling the first frequency domain range by *N* times, where *N* is greater than 0, may be a decimal or an integer; if N is a decimal, it means that the second frequency domain range is less than the first frequency domain range, and if *N* is an integer greater than 1, it means that the second frequency domain range is greater than the first frequency domain range.

In some embodiments, the second frequency domain range is a union or an intersection of multiple first frequency domain ranges, for example, may be a union or an intersection of a plurality of first frequency domain ranges within a detection window. For example, when the terminal performs detection in the first frequency domain ranges, the first frequency domain ranges configured by the terminal in different time units may be different. When the terminal performs resource selection, the selectable resources within the second frequency domain range are equal to the set of the first frequency domain ranges.

In some embodiments, the second frequency domain range is configured for at least one of the following granularities:
per resource pool;
per UE;
per CBR;
per QoS; and
per CR.

In some embodiments, the method further includes:
receiving information or channels within the first frequency domain range or the second frequency domain range or a third frequency domain range, the third frequency domain range being less than or greater than the first frequency domain range, or the third frequency domain range being less than or greater than the second frequency domain range.

The information includes at least one of feedback information, auxiliary information, control information, data information, discovery information and a reference signal. The channels include at least one of a physical sidelink feedback channel (PSFCH), a physical sidelink control channel (PSCCH), a physical sidelink shared channel (PSSCH), and a physical sidelink discovery channel (PSDCH).

In some embodiments, the information may be feedback information, and the channel may be the PSFCH.

The information or channels may be transmitted by the receiving terminal of the terminal. It is assumed that the terminal 2 is the receiving terminal of the terminal 1. If the terminal 2 transmits feedback information within the first frequency domain range, the terminal 1 only expects to open a radio frequency in one first frequency domain range, so the terminal 2 needs to ensure that the PSFCH transmitted to the terminal 1 is within the first frequency domain range, and at the same time, only performs detection, data transmission and feedback information reception in the first frequency domain range. If the feedback information is transmitted within the second frequency domain range and the second frequency domain range is greater than the first frequency domain range, the terminal 1 expects to open a radio frequency of one second frequency domain range, and the terminal 1 can perform detection in the first frequency domain range, receive feedback and/or transmit data within the second frequency domain range. The radio frequency energy is unchanged, the number of available resources is larger, and the energy overhead of blind detection of PSCCH can be reduced.

In some embodiments, the information or channels satisfy at least one of the following:
a frequency domain range of resources of the information or channels and/or a size of sub-channels is pre-defined by a protocol or configured by a control node or pre-configured by the control node or configured by a terminal or pre-configured by a terminal, and the frequency domain range and/or the size of the sub-channels may be independent of the parameters of the first frequency domain range; and in addition, if the parameters are configured, the parameters are those configured by per resource pool;
the frequency domain range of resources of the information or channels is less than or equal to the first frequency domain range, that is, the terminal 2 transmits the PSFCH in the frequency domain range of PSFCH resources, and the terminal 1 receives the PSFCH in the range of the PSFCH resources; and
the frequency domain range of resources of the information or channels is less than or equal to the second frequency domain range, that is, the terminal 2 transmits the PSFCH in the frequency domain range of PSFCH resources, and the terminal 1 receives the PSFCH in the range of the PSFCH resources.

In some embodiments, the PSSCH corresponding to the channel is located within the first frequency domain range, that is, according to the existing definition of the terminal 2, the PSFCH is located in the frequency domain range of the PSSCH. If the PSSCH is located within the first frequency domain range, this method can implicitly ensure that the PSFCH is located within the first frequency domain range, the location that restricts the resource selection of the terminal 1 is located within the first frequency domain range, and the resource selection of the PSFCH follows the existing rules; and/or
the PSSCH corresponding to the channel is located within the second frequency domain range.

In some embodiments, the information or channels are located in the lowest sub-channel range of the corresponding PSSCH, and the feedback information or PSFCH is the feedback for the corresponding PSSCH; or
the resources of the information or channels are determined according to the lowest sub-channel of the corresponding PSSCH and the frequency domain range of the corresponding PSSCH.

In some embodiments, the method further includes:
receiving the configuration information or control information transmitted within the first frequency domain range by the terminal or the network-side device, so as to guarantee that the terminal 1 can detect the resources reserved by the terminal 3 (that is, the terminal that transmits the SCI) within the first frequency domain range; where if the SCI is not detected, the resources reserved by the terminal 3 cannot appear in the frequency domain resource range selectable by the terminal 1.

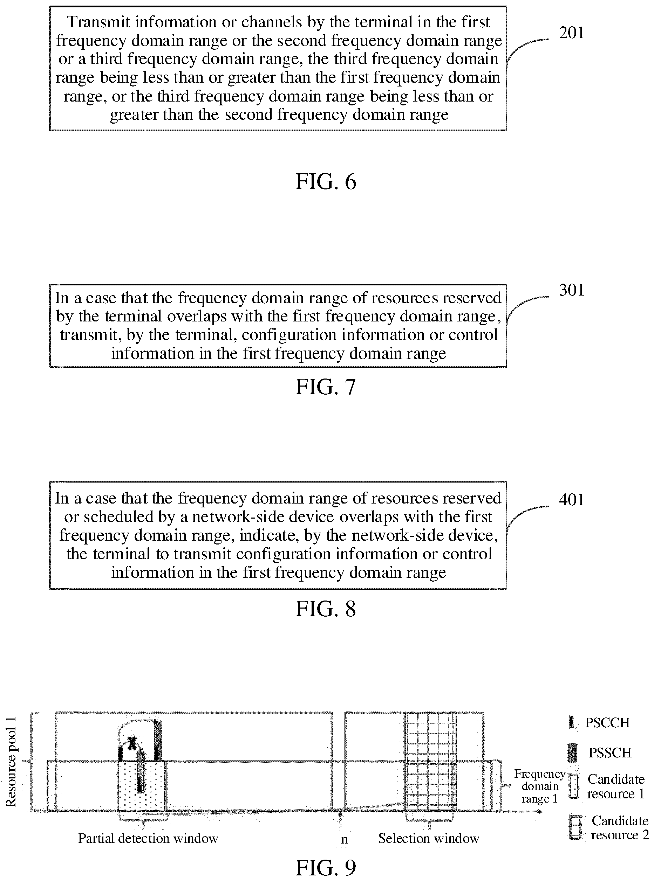

This embodiment of this application further provides a resource processing method. As shown in FIG. 6, the method includes:
step 201: transmitting, by a terminal, information or channels in a first frequency domain range or a second frequency domain range or a third frequency domain range, the third frequency domain range being less than or greater than the first frequency domain range, or the third frequency domain range being less than or greater than the second frequency domain range.

It is assumed that the terminal 2 is the receiving terminal of the terminal 1. If the terminal 2 transmits feedback information within the first frequency domain range, the terminal 1 only expects to open a radio frequency in one first frequency domain range, so the terminal 2 needs to ensure that the PSFCH transmitted to the terminal 1 is within the first frequency domain range, and at the same time, only performs detection, data transmission and feedback information reception in the first frequency domain range. If the feedback information is transmitted within the second frequency domain range and the second frequency domain range is greater than the first frequency domain range, the terminal 1 expects to open a radio frequency of one second frequency domain range, and the terminal 1 can perform detection in the first frequency domain range, receive feedback and/or transmit data within the second frequency domain range. The radio frequency energy is unchanged, the number of available resources is larger, and the energy overhead of blind detection of PSCCH can be reduced.

In some embodiments, the information includes at least one of feedback information, auxiliary information, control information, data information, discovery information and a reference signal. The channels include at least one of a physical sidelink feedback channel (PSFCH), a physical sidelink control channel (PSCCH), a physical sidelink shared channel (PSSCH), and a physical sidelink discovery channel (PSDCH).

In some embodiments, the information or channels satisfy at least one of the following:
a frequency domain range of resources of the information or channels or a size of sub-channels is pre-defined by a protocol or configured by a control node or pre-configured by the control node or configured by a terminal or pre-configured by a terminal;
the frequency domain range of resources of the information or channels is less than or equal to the first frequency domain range, that is, the terminal 2 transmits the PSFCH in the frequency domain range of PSFCH resources, and the terminal 1 receives the PSFCH in the range of the PSFCH resources; and
the frequency domain range of resources of the information or channels is less than or equal to the second frequency domain range, that is, the terminal 2 transmits the PSFCH in the frequency domain range of PSFCH resources, and the terminal 1 receives the PSFCH in the range of the PSFCH resources.

In some embodiments, the PSSCH corresponding to the channel is located within the first frequency domain range, that is, according to the existing definition of the terminal 2, the PSFCH is located in the frequency domain range of the PSSCH. If the PSSCH is located within the first frequency domain range 1, this method can implicitly ensure that the PSFCH is located within the first frequency domain range, the location that restricts the resource selection of the terminal 1 is located within the first frequency domain range 1, and the resource selection of the PSFCH follows the existing rules; and/or
the PSSCH corresponding to the channel is located within the second frequency domain range.

In some embodiments, the information or channels are located in the lowest sub-channel range of the corresponding PSSCH, and the feedback information or PSFCH is the feedback for the corresponding PSSCH; or
the resources of the information or channels are determined according to the lowest sub-channel of the corresponding PSSCH and the frequency domain range of the corresponding PSSCH.

In some embodiments, the terminal is configured to be at least one of the following:
receiving a power-saving indication signal of a network-side device or a transmitting terminal or a receiving terminal or a control terminal, which indicates a power-saving mode;
a source terminal type of a data packet is a pedestrian terminal (Pedestrian UE, PUE), or a destination terminal type of the data packet is PUE;
a terminal or PUE supporting a power-saving mode in a resource pool, or a resource pool being configured to be in a power-saving mode, or a resource pool for supporting at least one of pedestrian UE to vehicle UE (Pedestrian UE to Vehicle UE, P2V), vehicle UE to pedestrian UE (Vehicle UE to Pedestrian UE, V2P), pedestrian UE to pedestrian UE (Pedestrian UE to Pedestrian UE, P2P), and device to device (device to device, D2D) services.

In some embodiments, the power-saving indication signal is configured for at least one of the following granularities:
per resource pool;
per UE;
per UE type;
per QoS; and
per priority.

In some embodiments, the method further includes:
skipping, by the terminal, transmitting the information in a case that at least one of the following is not satisfied:
a frequency domain range of resources of the information or channels or a size of sub-channels is pre-defined by a protocol or configured by a control node or pre-configured by the control node or configured by a terminal or pre-configured by a terminal; for example, if the terminal does not configure information or the frequency domain resource range of the channels, no feedback information is transmitted.
the frequency domain range of resources of the information or channels is less than or equal to the first frequency domain range;
the frequency domain range of resources of the information or channels is less than or equal to the second frequency domain range;
a PSSCH corresponding to the channel is located within the first frequency domain range; and
the PSSCH corresponding to the channel is located within the second frequency domain range.

This embodiment of this application further provides a resource processing method. As shown in FIG. 7, the method includes:
step 301: transmitting, by a terminal, configuration information or control information in a first frequency domain range in a case that a frequency domain range of resources reserved by the terminal overlaps with the first frequency domain range.

The reserved resources may also be allocated or scheduled resources. Overlap includes partial overlap and complete overlap.

The configuration information or control information is carried by at least one of the following:
a radio resource control (RRC) signal;
a media access control (MAC) control element (CE); and
sidelink control information (SCI).

In some embodiments, the frequency domain range of the reserved resources does not overlap with the first frequency domain range, the SCI may be located outside the first frequency domain range, and certainly, the SCI may also be located within the first frequency domain range.

In some embodiments, if the SCI is located within the first frequency domain range, the terminal can reserve resources in the first frequency domain range of the resource pool; or if the SCI is located outside the first frequency domain range, the frequency domain range of resources reserved by the terminal does not overlap with the first frequency domain range.

That is, the terminal 3 (the terminal that transmits SCI in the resource pool) transmits control information (SCI format 1_X and/or SCI format 2_X) within the first frequency domain range; alternatively, if the SCI transmitted by the terminal 3 is located within the first frequency domain range, resources in the frequency domain range of the resource pool can be reserved; and if the SCI transmitted by the terminal 3 is located outside the first frequency domain range, the frequency domain range of the reserved resources cannot overlap with the first frequency domain range. That is, it is guaranteed that the terminal 1 can detect the resources reserved by the terminal 3 in the first frequency domain range. If the SCI is not detected, the resources reserved by the terminal 3 cannot appear in the frequency domain resource range selectable by the terminal 1.

In some embodiments, the terminal is configured to be at least one of the following:
receiving a power-saving indication signal of a network-side device or a transmitting terminal or a receiving terminal or a control terminal, which indicates a power-saving mode;
supportable terminal types or terminal capabilities in the resource pool; and
a terminal or PUE supporting a power-saving mode in a resource pool, or a resource pool being configured to be in a power-saving mode, or a resource pool for supporting at least one of pedestrian UE to vehicle UE (P2V), vehicle UE to pedestrian UE (V2P), pedestrian UE to pedestrian UE (P2P), and device to device (D2D) services.

In some embodiments, the power-saving indication signal is configured for at least one of the following granularities:
per resource pool;
per UE;
per UE type;
per QoS; and
per priority.

This embodiment of this application further provides a resource processing method. As shown in FIG. 8, the method includes:
step 401: indicating, by a network-side device, a terminal to transmit configuration information or control information in a first frequency domain range in a case that a frequency domain range of resources reserved or scheduled by the network-side device overlaps with the first frequency domain range.

The configuration information or control information is carried by at least one of the following:
a radio resource control (RRC) signal;
a media access control (MAC) control element (CE);
sidelink control information (SCI); and
downlink control information (DCI).

In some embodiments, the method further includes:
transmitting, by the network-side device, a power-saving indication signal to the terminal to indicate that the terminal is in a power-saving mode.

In some embodiments, the power-saving indication signal is configured for at least one of the following granularities:
per resource pool;
per UE;
per UE type;
per QoS; and
per priority.

In a specific embodiment, the UE in a network pre-configuration resource pool 1 supports the power-saving mode or a network configuration resource pool 1 supports the transmission and/or receiving of PUE. The size and location of partial frequency domain range 1 are pre-configured. The lowest PRB of the lowest sub-channel of the frequency domain range 1 is the lowest PRB of the lowest sub-channel of the resource pool.

If the terminal 1 is a UE that needs power saving, the terminal 1 needs to transmit information to the terminal 2. The terminal 3 is a terminal in the resource pool that does not need to save power.

As shown in FIG. 9, the terminal 1 performs detection in the pre-configured frequency domain range 1 (i.e. the first frequency domain range) of the corresponding partial detection window, and performs resource selection in the frequency domain range 1 of the corresponding selection window (the range of candidate resources 1).

The terminal 3 performs detection in the frequency domain range of the resource pool 1 of the corresponding detection window. If the PSCCH transmitted by the terminal 3 is in the frequency domain range 1, the frequency domain range of the resources which can be reserved by the terminal 3 is the whole frequency domain range of the resource pool 1 (the range of the candidate resource 2). If the PSCCH transmitted by the terminal 3 is outside the frequency domain range 1 (as shown in FIG. 9), the terminal 3 cannot reserve frequency domain resources overlapping with the frequency domain range 1 (as shown in FIG. 9, the first resource reserved by the PSCCH overlaps with the frequency domain resource range 1, which is not allowed; the second resource reserved does not overlap with the frequency domain range 1, which is allowed).

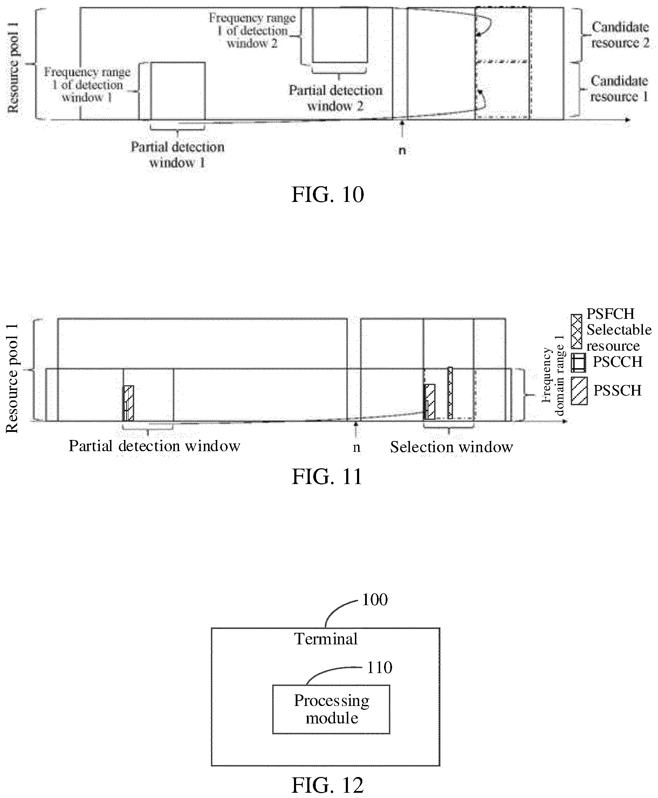

In another specific embodiment, the UE in the network pre-configuration resource pool 1 supports the power-saving mode or a network configuration resource pool 1 supports the transmission and/or receiving of PUE. The size of the partial frequency domain range 1 (i.e. the first frequency domain range) is pre-configured, and the location of the frequency domain range 1 is related to the location of the partial detection window. As shown in FIG. 10, the size of the partial detection window is 1/2 of the frequency domain size of the resource pool. The lowest PRB of the lowest sub-channel of the frequency domain range 1 of the partial detection window 1 is the lowest PRB of the lowest sub-channel of the resource pool. The highest PRB of the highest sub-channel of the frequency domain range 1 of the partial detection window 2 is the highest PRB of the highest sub-channel of the resource pool.

If the terminal 1 is a UE that needs power saving, the terminal 1 needs to transmit information to the terminal 2. The terminal 3 is a terminal in the resource pool that does not need to save power.

The terminal 1 performs detection in the corresponding frequency domain range 1 of the partial detection window 1 and in the corresponding frequency domain range 1 of the partial detection window 2 (the name is the same, but the configured locations/sizes can be different). In the corresponding selection window, resources are selected from selectable resources (candidate resources 1) in the frequency domain range 1 corresponding to the partial detection window 1 and from selectable resources (candidate resources 2) in the frequency domain range 1 corresponding to the partial detection window 2. As shown in FIG. 10, the terminal 1 may select resources from the set of the candidate resources 1 and the candidate resources 2.

In another specific embodiment, the UE in the network pre-configuration resource pool 1 supports the power-saving mode or a network configuration resource pool 1 supports the transmission and/or receiving of PUE. The size and location of the partial frequency domain range 1 are pre-configured. As shown in FIG. 11, the lowest PRB of the lowest sub-channel of the frequency domain range 1 is the lowest PRB of the lowest sub-channel of the resource pool. The frequency domain range of selectable resources of the feedback resources/PSFCH of the receiving end of the network pre-configured terminal supporting the power-saving mode is equal to the frequency domain range 1 (i.e. the first frequency domain range).

If the terminal 1 is a UE that needs power saving, the terminal 1 needs to transmit information to the terminal 2.

The terminal 1 performs detection in the pre-configured frequency domain range 1 of the corresponding partial detection window, and performs resource selection in the frequency domain range 1 of the corresponding selection window (the range of the candidate resources 1).

The terminal 2 selects the resources of the PSFCH in the frequency domain range 1 for feedback.

It should be noted that an executive body for the resource processing method provided by this embodiment of this application may be a resource processing apparatus or a module in the resource processing apparatus for performing the loading of the method processing resources. In this embodiment of this application, the loading of the resource processing method performed by the resource processing apparatus is taken as an example to explain the resource processing method provided by this embodiment of this application.

This embodiment of this application provides a resource processing apparatus, which is applied to a terminal 100. As shown in FIG. 12, the apparatus includes:
a processing module 110, configured to perform detection in a first frequency domain range, and perform resource selection in the first frequency domain range and a second frequency domain range based on a detection result.

In some embodiments, the first frequency domain range is pre-defined by a protocol or configured by a control node or pre-configured by the control node or configured by a terminal or pre-configured by a terminal.

In some embodiments, the first frequency domain range satisfies at least one of the following:
a size and/or a location of the first frequency domain range is related to a location of a time domain unit and/or the index of time domain resources;
the size and/or the location of the first frequency domain range is related to radio resource control (RRC) configuration of the detection window;
a lowest sub-channel within the first frequency domain range is a lowest sub-channel of a resource pool;
a highest sub-channel within the first frequency domain range is a highest sub-channel of the resource pool;
a lowest physical resource block (PRB) of the lowest sub-channel within the first frequency domain range is a lowest PRB of the lowest sub-channel of the resource pool;
a highest PRB of the highest sub-channel within the first frequency domain range is a highest PRB of the highest sub-channel of the resource pool; and
the size of the first frequency domain range is scaling of a size of the resource pool, and a scaling factor is M being greater than 0.

In some embodiments, the first frequency domain range is configured for at least one of the following granularities:
per resource pool (per resource pool);
per terminal (per UE);
per channel busy rate (per CBR);
per channel occupancy ratio (per CR); and
per quality of service (per QoS).

In some embodiments, the following is further included:

obtaining a corresponding relationship between the first frequency domain range and at least one of the following:
CR;
CBR;
QoS;
transmission type;
service type;
source address; and
target address.

In some embodiments, the corresponding relationship is pre-defined by the protocol or configured by the control node or pre-configured by the control node or configured by a terminal or pre-configured by a terminal.

In some embodiments, the second frequency domain range is pre-defined by the protocol or configured by the control node or pre-configured by the control node or configured by a terminal or pre-configured by a terminal.

In some embodiments, the second frequency domain range satisfies at least one of the following:
the second frequency domain range is related to the first frequency domain range;
the second frequency domain range is equal to one or more resource pools of the terminal, and the one or more resource pools are pre-defined by a protocol or configured by a control node or pre-configured by the control node or configured by a terminal or pre-configured by a terminal; and
the second frequency domain range is obtained according to a preset rule, and the preset rule is pre-defined by a protocol or configured by a control node or pre-configured by the control node or configured by a terminal or pre-configured by a terminal.

In some embodiments, the second frequency domain range is the same as the first frequency domain range; or
the second frequency domain range is of a size of the frequency domain range obtained by scaling the first frequency domain range by N times, and N is greater than 0.

In some embodiments, the second frequency domain range is a union or an intersection of multiple first frequency domain ranges.

In some embodiments, the second frequency domain range is configured for at least one of the following granularities:
per resource pool;
per UE;
per CBR; and
per CR.

In some embodiments, the processing module 110 is further configured to receive information or channels within the first frequency domain range or the second frequency domain range or a third frequency domain range, the third frequency domain range being less than or greater than the first frequency domain range, or the third frequency domain range being less than or greater than the second frequency domain range.

The information includes at least one of feedback information, auxiliary information, control information, data information, discovery information and a reference signal. The channels include at least one of a physical sidelink feedback channel (PSFCH), a physical sidelink control channel (PSCCH), a physical sidelink shared channel (PSSCH), and a physical sidelink discovery channel (PSDCH).

In some embodiments, the information may be feedback information, and the channel may be the PSFCH.

In some embodiments, the information or channels satisfy at least one of the following:
a frequency domain range of resources of the information or channels and/or a size of sub-channels is pre-defined by a protocol or configured by a control node or pre-configured by the control node or configured by a terminal or pre-configured by a terminal;
the frequency domain range of resources of the information or channels is less than or equal to the first frequency domain range; and
the frequency domain range of resources of the information or channels is less than or equal to the second frequency domain range.

In some embodiments, a PSSCH corresponding to the channel is located within the first frequency domain range; and/or
the PSSCH corresponding to the channel is located within the second frequency domain range.

In some embodiments, the information or channels are located in a lowest sub-channel range of the corresponding PSSCH; or
the resources of the information or channels are determined according to the lowest sub-channel of the corresponding PSSCH and the frequency domain range of the corresponding PSSCH.

In some embodiments, the processing module 110 is further configured to receive configuration information or control information transmitted within the first frequency domain range by the terminal or a network-side device.

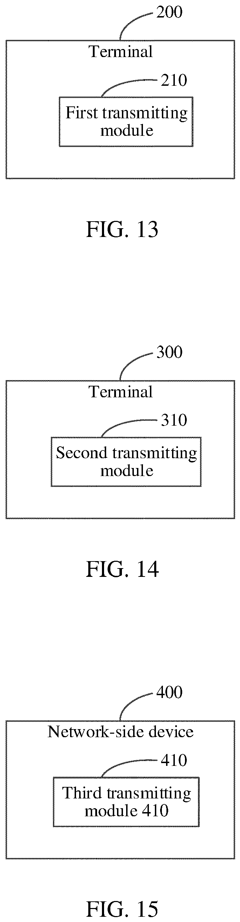

This embodiment of this application provides a resource processing apparatus, which is applied to a terminal 200. As shown in FIG. 13, the apparatus includes:
a first transmitting module 210, configured to transmit information or channels in a first frequency domain range or a second frequency domain range or a third frequency domain range, the third frequency domain range being less than or greater than the first frequency domain range, or the third frequency domain range being less than or greater than the second frequency domain range.

The information includes at least one of feedback information, auxiliary information, control information, data information, discovery information and a reference signal. The channels include at least one of a physical sidelink feedback channel (PSFCH), a physical sidelink control channel (PSCCH), a physical sidelink shared channel (PSSCH), and a physical sidelink discovery channel (PSDCH).

In some embodiments, the information or channels satisfy at least one of the following:
a frequency domain range of resources of the information or channels or a size of sub-channels is pre-defined by a protocol or configured by a control node or pre-configured by the control node or configured by a terminal or pre-configured by a terminal;
the frequency domain range of resources of the information or channels is less than or equal to the first frequency domain range; and
the frequency domain range of resources of the information or channels is less than or equal to the second frequency domain range.

In some embodiments, a PSSCH corresponding to the channel is located within the first frequency domain range; and/or
the PSSCH corresponding to the channel is located within the second frequency domain range.

In some embodiments, the information or channels are located in a lowest sub-channel range of the corresponding PSSCH; or
the resources of the information or channels are determined according to the lowest sub-channel of the corresponding PSSCH and the frequency domain range of the corresponding PSSCH.

In some embodiments, the terminal is configured to be at least one of the following:
receiving a power-saving indication signal of a network-side device or a transmitting terminal or a receiving terminal or a control terminal, which indicates a power-saving mode;
a source terminal type of a data packet is a pedestrian terminal (PUE), or a destination terminal type of the data packet is PUE; and
a terminal or PUE supporting a power-saving mode in a resource pool, or a resource pool being configured to be in a power-saving mode, or a resource pool for supporting at least one of pedestrian UE to vehicle UE (P2V), vehicle UE to pedestrian UE (V2P), pedestrian UE to pedestrian UE (P2P), and device to device (D2D) services.

In some embodiments, the power-saving indication signal is configured for at least one of the following granularities:
per resource pool;
per UE;
per UE type;
per QoS; and
per priority.

In some embodiments, the method further includes:
skipping, by the terminal, transmitting the information in a case that at least one of the following is not satisfied:
a frequency domain range of resources of the information or channels or a size of sub-channels is pre-defined by a protocol or configured by a control node or pre-configured by the control node or configured by a terminal or pre-configured by a terminal;
the frequency domain range of resources of the information or channels is less than or equal to the first frequency domain range;
the frequency domain range of resources of the information or channels is less than or equal to the second frequency domain range;
a PSSCH corresponding to the channel is located within the first frequency domain range; and
the PSSCH corresponding to the channel is located within the second frequency domain range.

This embodiment of this application provides a resource processing apparatus, which is applied to a terminal 300. As shown in FIG. 14, the apparatus includes:
a second transmitting module 310, configured to transmit configuration information or control information in a first frequency domain range in a case that a frequency domain range of resources reserved by the terminal overlaps with the first frequency domain range,

In some embodiments, the frequency domain range of the reserved resources does not overlap with the first frequency domain range, the SCI may be located outside the first frequency domain range, and certainly, the SCI may also be located within the first frequency domain range.

In some embodiments, if the SCI is located within the first frequency domain range, the terminal can reserve resources in the first frequency domain range of the resource pool; or if the SCI is located outside the first frequency domain range, the frequency domain range of resources reserved by the terminal does not overlap with the first frequency domain range.

In some embodiments, the configuration information or control information is carried by at least one of the following:
a radio resource control (RRC) signal;
a media access control (MAC) control element (CE); and
sidelink control information (SCI).

In some embodiments, the terminal is configured to be at least one of the following:
receiving a power-saving indication signal of a network-side device or a transmitting terminal or a receiving terminal or a control terminal, which indicates a power-saving mode;
supportable terminal types or terminal capabilities in the resource pool; and
a terminal or PUE supporting a power-saving mode in a resource pool, or a resource pool being configured to be in a power-saving mode, or a resource pool for supporting at least one of pedestrian UE to vehicle UE (P2V), vehicle UE to pedestrian UE (V2P), pedestrian UE to pedestrian UE (P2P), and device to device (D2D) services.

In some embodiments, the power-saving indication signal is configured for at least one of the following granularities:
per resource pool;
per UE;
per UE type;
per QoS; and
per priority.

This embodiment of this application provides a resource processing apparatus, which is applied to a network-side device 400. As shown in FIG. 15, the apparatus includes:
a third transmitting module 410, configured to indicate a terminal to transmit configuration information or control information in a first frequency domain range in a case that a frequency domain range of resources reserved or scheduled by the network-side device overlaps with the first frequency domain range.

The configuration information or control information is carried by at least one of the following:
a radio resource control (RRC) signal;
a media access control (MAC) control element (CE);
downlink control information (DCI); and
sidelink control information (SCI).

In some embodiments, the third transmitting module 410 is further configured to transmit a power-saving indication signal to the terminal to indicate that the terminal is in a power-saving mode.

In some embodiments, the power-saving indication signal is configured for at least one of the following granularities:
per resource pool;
per UE;
per UE type;
per QoS; and
per priority.

The resource processing apparatus in this embodiment of this application may be an apparatus, and may also be a component or an integrated circuit or a chip in a terminal or a network-side device. The apparatus may be a mobile electronic device or a non-mobile electronic device. For example, the mobile electronic device may be a mobile phone, a tablet computer, a notebook computer, a handheld computer, a vehicle-mounted electronic device, a wearable device, an ultra-mobile personal computer (ultra-mobile personal computer, UMPC), a netbook or a personal digital assistant (personal digital assistant, PDA), etc. The non-mobile electronic device may be a network attached storage (Network Attached Storage, NAS), a personal computer (personal computer, PC), a television (television, TV), a teller machine or a self-service machine, etc., and this embodiment of this application is not specifically limited.

The resource processing apparatus in this embodiment of this application may be an apparatus with an operating system. The operating system may be an Android (Android) operating system, or an ios operating system, or other possible operating systems; and this embodiment of this application is not specifically limited.

Optionally, this embodiment of this application further provides an electronic device, which includes a processor, a memory and a program or an instruction stored in the memory and executable on the processor. When the program or instruction is executed by the processor, each process of embodiments of the resource processing method as described above is implemented, the same technical effect can be achieved, and the processes are not repeated here to avoid repetition.

It should be noted that the electronic device in this embodiment of this application includes the mobile electronic device and the non-mobile electronic device mentioned above.

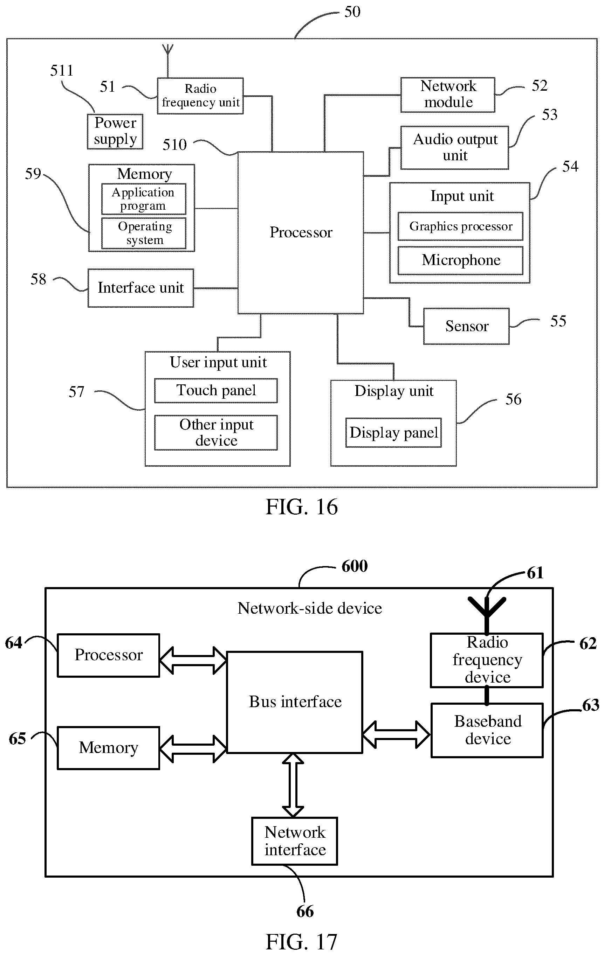

The electronic device of this embodiment may be a terminal. FIG. 16 is a schematic diagram of the hardware structure of a terminal for realizing various embodiments of this application. The terminal 50 includes, but is not limited to: a radio frequency unit 51, a network module 52, an audio output unit 53, an input unit 54, a sensor 55, a display unit 56, a user input unit 57, an interface unit 58, a memory 59, a processor 510, a power supply 511, and the like. A person skilled in the art may understand that the structure of the terminal shown in FIG. 16 does not constitute a limitation to the terminal, and the terminal may include more components or fewer components than those shown in the figure, or some components may be combined, or a different component deployment may be used. In this embodiment of this application, the terminal includes, but is not limited to, a mobile phone, a tablet computer, a notebook computer, a handheld computer, a vehicle-mounted terminal, a wearable device, a pedometer and the like.

It should be understood that in this embodiment of this application, the radio frequency unit 51 may be configured to receive and transmit information or receive and transmit signals in the process of communication, specifically, receive downlink data from a base station and transmit the downlink data to the processor 510 for processing; in addition, transmit uplink data to the base station. Generally, the radio frequency unit 51 includes, but is not limited to, an antenna, at least one amplifier, a transceiver, a coupler, a low noise amplifier, a duplexer and the like. In addition, the radio frequency unit 51 may also communicate with a network and another device by a wireless communication system.

The memory 59 may be configured to store software programs and various data. The memory 59 may mainly include a program storage area and a data storage area. The program storage area may store an operating system, an application program required by at least one function (such as a sound play function and an image play function), and the like. The data storage area may store data (such as audio data, a phone book, etc.) created according to the use of the mobile phone. In addition, the memory 59 may include a high-speed random access memory, and may also include a nonvolatile memory, for example, at least one disk storage device, a flash storage device, or other volatile solid-state storage device.

The processor 510 is a control center of the terminal, and is connected to various parts of the whole terminal by using various interfaces and lines. By running or executing the software program and/or module stored in the memory 59, and invoking data stored in the memory 59, various functions of the terminal are performed and data is processed, thereby performing overall monitoring on the intelligent terminal. The processor 510 may include one or at least two processing units. Preferably, the processor 510 may be integrated with an application processor and a modulation/demodulation processor. The application processor mainly processes an operating system, user interfaces, application programs, etc., and the modulation/demodulation processor mainly processes wireless communication. It may be understood that the foregoing modulation/demodulation processor may also not be integrated into the processor 510.

The terminal 50 may further include a power supply 511 (such as a battery) for supplying power to various components. Preferably, the power supply 511 may be logically connected to the processor 510 by using a power management system, thereby implementing functions such as charging, discharging, and power consumption management by using the power management system.

In addition, the terminal 50 includes some functional modules not shown, which are not described in detail here.

In some embodiments, the processor 510 is configured to perform detection in a first frequency domain range, and perform resource selection in the first frequency domain range or a second frequency domain range based on a detection result.

In some embodiments, the first frequency domain range is pre-defined by a protocol or configured by a control node or pre-configured by the control node or configured by a terminal or pre-configured by a terminal.

In some embodiments, the first frequency domain range satisfies at least one of the following:
a size and/or a location of the first frequency domain range is related to a location of a time domain unit and/or the index of time domain resources;
the size and/or the location of the first frequency domain range is related to radio resource control (RRC) configuration of the detection window;
a lowest sub-channel within the first frequency domain range is a lowest sub-channel of a resource pool;
a highest sub-channel within the first frequency domain range is a highest sub-channel of the resource pool;
a lowest physical resource block (PRB) of the lowest sub-channel within the first frequency domain range is a lowest PRB of the lowest sub-channel of the resource pool;
a highest PRB of the highest sub-channel within the first frequency domain range is a highest PRB of the highest sub-channel of the resource pool; and
the size of the first frequency domain range is scaling of a size of the resource pool, and a scaling factor is M being greater than 0.

In some embodiments, the first frequency domain range is configured for at least one of the following granularities:
per resource pool (per resource pool);
per terminal (per UE);
per channel busy rate (per CBR);
per channel occupancy ratio (per CR); and
per quality of service (per QoS).

In some embodiments, the processor 510 is further configured to obtain the corresponding relationship between the first frequency domain range and at least one of the following:
CR;
CBR;
QoS;
transmission type;
service type;
source address; and
target address.

In some embodiments, the corresponding relationship is pre-defined by the protocol or configured by the control node or pre-configured by the control node or configured by a terminal or pre-configured by a terminal.

In some embodiments, the second frequency domain range is pre-defined by the protocol or configured by the control node or pre-configured by the control node or configured by a terminal or pre-configured by a terminal.

In some embodiments, the second frequency domain range satisfies at least one of the following:
the second frequency domain range is related to the first frequency domain range;
the second frequency domain range is equal to one or more resource pools of the terminal, and the one or more resource pools are pre-defined by a protocol or configured by a control node or pre-configured by the control node or configured by a terminal or pre-configured by a terminal; and
the second frequency domain range is obtained according to a preset rule, and the preset rule is pre-defined by a protocol or configured by a control node or pre-configured by the control node or configured by a terminal or pre-configured by a terminal.

In some embodiments, the second frequency domain range is the same as the first frequency domain range; or
the second frequency domain range is of a size of the frequency domain range obtained by scaling the first frequency domain range by N times, and N is greater than 0.

In some embodiments, the second frequency domain range is a union or an intersection of multiple first frequency domain ranges.

In some embodiments, the second frequency domain range is configured for at least one of the following granularities:
per resource pool;
per UE;
per CBR; and
per CR.

In some embodiments, the processor 510 is further configured to receive information or channels in the first frequency domain range or the second frequency domain range or a third frequency domain range, the third frequency domain range being less than or greater than the first frequency domain range, or the third frequency domain range being less than or greater than the second frequency domain range.

The information includes at least one of feedback information, auxiliary information, control information, data information, discovery information and a reference signal. The channels include at least one of a physical sidelink feedback channel (PSFCH), a physical sidelink control channel (PSCCH), a physical sidelink shared channel (PSSCH), and a physical sidelink discovery channel (PSDCH).

In some embodiments, the information or channels satisfy at least one of the following:
a frequency domain range of resources of the information or channels and/or a size of sub-channels is pre-defined by a protocol or configured by a control node or pre-configured by the control node or configured by a terminal or pre-configured by a terminal;
the frequency domain range of resources of the information or channels is less than or equal to the first frequency domain range; and
the frequency domain range of resources of the information or channels is less than or equal to the second frequency domain range.

In some embodiments, a PSSCH corresponding to the channel is located within the first frequency domain range; and/or
the PSSCH corresponding to the channel is located within the second frequency domain range.

In some embodiments, the information or channels are located in a lowest sub-channel range of the corresponding PSSCH; or
the resources of the information or channels are determined according to the lowest sub-channel of the corresponding PSSCH and the frequency domain range of the corresponding PSSCH.

In some embodiments, the processor 510 is further configured to receive configuration information or control information transmitted within a first frequency domain range by a terminal or a network-side device.

In some embodiments, the processor 510 is further configured to transmit information or channels within the first frequency domain range or the second frequency domain range or a third frequency domain range, the third frequency domain range being less than or greater than the first frequency domain range, or the third frequency domain range is less than or greater than the second frequency domain range.

The information includes at least one of feedback information, auxiliary information, control information, data information, discovery information and a reference signal. The channels include at least one of a physical sidelink feedback channel (PSFCH), a physical sidelink control channel (PSCCH), a physical sidelink shared channel (PSSCH), and a physical sidelink discovery channel (PSDCH).

In some embodiments, the information or channels satisfy at least one of the following:
a frequency domain range of resources of the information or channels or a size of sub-channels is pre-defined by a protocol or configured by a control node or pre-configured by the control node or configured by a terminal or pre-configured by a terminal;
the frequency domain range of resources of the information or channels is less than or equal to the first frequency domain range; and
the frequency domain range of resources of the information or channels is less than or equal to the second frequency domain range.

In some embodiments, a PSSCH corresponding to the channel is located within the first frequency domain range; and/or
the PSSCH corresponding to the channel is located within the second frequency domain range.

In some embodiments, the information or channels are located in a lowest sub-channel range of the corresponding PSSCH; or
the resources of the information or channels are determined according to the lowest sub-channel of the corresponding PSSCH and the frequency domain range of the corresponding PSSCH.

In some embodiments, the terminal is configured to be at least one of the following:
receiving a power-saving indication signal of a network-side device or a transmitting terminal or a receiving terminal or a control terminal, which indicates a power-saving mode;
a source terminal type of a data packet is a pedestrian terminal (PUE), or a destination terminal type of the data packet is PUE; and
a terminal or PUE supporting a power-saving mode in a resource pool, or a resource pool being configured to be in a power-saving mode, or a resource pool for supporting at least one of pedestrian UE to vehicle UE (P2V), vehicle UE to pedestrian UE (V2P), pedestrian UE to pedestrian UE (P2P), and device to device (D2D) services.

In some embodiments, the power-saving indication signal is configured for at least one of the following granularities:
per resource pool;
per UE;
per UE type;
per QoS; and
per priority.

In some embodiments, the processor 510 is further configured to skip transmitting the feedback information in a case that at least one of the following is not satisfied:
a frequency domain range of resources of the information or channels or a size of sub-channels is pre-defined by a protocol or configured by a control node or pre-configured by the control node or configured by a terminal or pre-configured by a terminal;
the frequency domain range of resources of the information or channels is less than or equal to the first frequency domain range;
the frequency domain range of resources of the information or channels is less than or equal to the second frequency domain range;
a PSSCH corresponding to the channel is located within the first frequency domain range; and
the PSSCH corresponding to the channel is located within the second frequency domain range.

In some embodiments, the processor 510 is further configured to transmit configuration information or control information in a first frequency domain range in a case that the frequency domain range of resources reserved by the terminal overlaps with the first frequency domain range.

The configuration information or control information is carried by at least one of the following:
a radio resource control (RRC) signal;
a media access control (MAC) control element (CE); and
sidelink control information (SCI).

In some embodiments, the terminal is configured to be at least one of the following:
receiving a power-saving indication signal of a network-side device or a transmitting terminal or a receiving terminal or a control terminal, which indicates a power-saving mode;
supportable terminal types or terminal capabilities in the resource pool; and
a terminal or PUE supporting a power-saving mode in a resource pool, or a resource pool being configured to be in a power-saving mode, or a resource pool for supporting at least one of pedestrian UE to vehicle UE (P2V), vehicle UE to pedestrian UE (V2P), pedestrian UE to pedestrian UE (P2P), and device to device (D2D) services.

In some embodiments, the power-saving indication signal is configured for at least one of the following granularities:
per resource pool;
per UE;
per UE type;
per QoS; and
per priority.

The electronic device of this embodiment further may be a network-side device. As shown in FIG. 17, the network-side device 600 includes: an antenna 61, a radio frequency apparatus 62, and a baseband apparatus 63. The antenna 61 is connected to the radio frequency apparatus 62. In the uplink direction, the radio frequency apparatus 62 receives information through the antenna 61 and transmits the received information to the baseband apparatus 63 for processing. In the downlink direction, the baseband apparatus 63 processes the information to be transmitted and transmits the information to the radio frequency apparatus 62; and the radio frequency apparatus 62 processes the received information and then transmits the information out through the antenna 61.

The above frequency band processing apparatus may be located in the baseband apparatus 63, and the method executed by the network-side device in the above embodiment may be realized in the baseband apparatus 63. The baseband apparatus 63 includes a processor 64 and a memory 65.

For example, the baseband apparatus 63 may include at least one baseband board, and a plurality of chips are arranged on the baseband board. As shown in FIG. 17, one of the chips, for example, being a processor 64 is connected to the memory 65 to invoke the program in the memory 65 and execute the network-side device operation shown in the above method embodiment.

The baseband apparatus 63 may further include a network interface 66, which is configured to exchange information with the radio frequency apparatus 62. The interface is, for example, a common public radio interface (common public radio interface, CPRI).

The processor here may be one processor or a collective name of multiple processing elements. For example, the processor may be a CPU or an ASIC, or is configured as one or more integrated circuits for implementing the method performed by the above network-side device, for example: one or more microprocessors (DSP), or one or more field programmable gate arrays (FPGA), etc. A storage element may be one memory or a collective name for multiple storage elements.

The memory 65 may be a volatile memory or a nonvolatile memory, and or may include both a volatile memory and a nonvolatile memory. The nonvolatile memory may be a read-only memory (Read-Only Memory, ROM), a programmable read-only memory (Programmable ROM, PROM), an erasable programmable read-only memory (erasable PROM, EPROM), or an electrically erasable programmable read-only memory (Electrically EPROM, EEPROM) or a flash memory. The volatile memory may be a random access memory (Random Access Memory, RAM) that acts as an external cache. By way of example and not limitation, many forms of RAM are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 65 described in this embodiment of this application includes, but is not limited to, these memories and any other suitable types of memories.

In some embodiments, the processor 64 is configured to indicate a terminal to transmit configuration information or control information in a first frequency domain range in a case that a frequency domain range of resources reserved or scheduled by the network-side device overlaps with the first frequency domain range.

The configuration information or control information is carried by at least one of the following:
a radio resource control (RRC) signal;
a media access control (MAC) control element (CE);
downlink control information (DCI); and
sidelink control information (SCI).

In some embodiments, the processor 64 is further configured to transmit a power-saving indication signal to the terminal to indicate that the terminal is in a power-saving mode.

In some embodiments, the power-saving indication signal is configured for at least one of the following granularities:
per resource pool;
per UE;
per UE type;
per QoS; and
per priority.

This embodiment of this application also provides a readable storage medium storing a program or an instruction. When the program or instruction is executed by the processor, each process of embodiments of the resource processing method as described above is implemented, the same technical effect can be achieved, and the processes are not repeated here to avoid repetition.

The processor is the processor in the electronic device described in the above embodiment. The readable storage medium includes a computer readable storage medium, such as a computer read-only memory (Read-Only Memory, ROM), a random access memory (Random Access Memory, RAM), a magnetic disk or an optical disk.

This embodiment of this application further provides a chip. The chip includes a processor and a communication interface. The communication interface is coupled with the processor. The processor is configured to run the program or the instruction to realize each process of the embodiments of the resource processing method, the same technical effect can be achieved, and the processes are not repeated here to avoid repetition.

It should be understood that the chip mentioned in this embodiment of this application may also be called a system level chip, a system chip, a chip system or a system-on-chip.

It should be noted that the terms "include," "comprise," and any variation thereof herein are intended to cover a non-exclusive inclusion. Therefore, in the context of a process, a method, an object, or an apparatus that includes a series of elements, the process, method, object, or apparatus not only includes such elements, but also includes other elements not specified expressly, or may include inherent elements of the process, method, object, or apparatus. If no more limitations are made, an element limited by "include a/an..." does not exclude other same elements existing in the process, the method, the article, or the apparatus which includes the element. In addition, it should be pointed out that the scope of the method and apparatuses in the implementations of this application is not limited to performing functions in the order shown or discussed, but also can include performing functions in a substantially simultaneous manner or in the reverse order according to the functions involved. For example, the described methods can be performed in a different order from that described, and various steps can be added, omitted, or combined. In addition, features described with reference to some examples can be combined in other examples.

According to the descriptions in the foregoing implementations, a person skilled in the art may clearly learn that the method according to the foregoing embodiment may be implemented by relying on software and a necessary general hardware platform, certainly the method can also be implemented by hardware, but in many cases, the former is the better implementation. Based on such an understanding, the technical solutions of this application essentially, or the part contributing to the prior art, may be presented in the form of a software product. The computer software product is stored in a storage medium (for example, a ROM/RAM, a magnetic disk, or an optical disc) and includes several instructions to enable a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations which are merely illustrative and not restrictive. Under the teaching of this application, several forms may be made by a person of ordinary skill in the art without departing from the purpose of this application and the scope protected by the claim, and forms are all within the protection scope of this application.

## Claims

1. A resource processing method, comprising:
performing detection by a terminal in a first frequency domain range, and performing resource selection in the first frequency domain range or a second frequency domain range based on a detection result.

2. The resource processing method according to claim 1, wherein the first frequency domain range is pre-defined by a protocol, configured by a control node, pre-configured by the control node, configured by a terminal, or pre-configured by a terminal.

3. The resource processing method according to claim 1, wherein the first frequency domain range satisfies at least one of the following:
a size and/or a location of the first frequency domain range is related to a location of a time domain unit and/or the index of time domain resources;
the size and/or the location of the first frequency domain range is related to radio resource control (RRC) configuration of a detection window;
a lowest sub-channel within the first frequency domain range is a lowest sub-channel of a resource pool;
a highest sub-channel within the first frequency domain range is a highest sub-channel of the resource pool;
a lowest physical resource block (PRB) of the lowest sub-channel within the first frequency domain range is a lowest PRB of the lowest sub-channel of the resource pool;
a highest PRB of the highest sub-channel within the first frequency domain range is a highest PRB of the highest sub-channel of the resource pool; and
the size of the first frequency domain range is scaling of a size of the resource pool, and a scaling factor is M being greater than 0.

4. The resource processing method according to claim 1, wherein the first frequency domain range is configured for at least one of the following granularities:
per resource pool;
per terminal;
per channel busy rate (CBR);
per channel occupancy ratio (CR); and
per quality of service (QoS).

5. The resource processing method according to claim 1, further comprising:
obtaining a corresponding relationship between the first frequency domain range and at least one of the following:
CR;
CBR;
QoS;
transmission type;
service type;
source address; and
target address.

6. The resource processing method according to claim 5, wherein the corresponding relationship is pre-defined by a protocol or configured by a control node or pre-configured by the control node or configured by a terminal or pre-configured by a terminal.

7. The resource processing method according to claim 1, wherein the second frequency domain range is pre-defined by a protocol or configured by a control node or pre-configured by the control node or configured by a terminal or pre-configured by a terminal.

8. The resource processing method according to claim 1, wherein the second frequency domain range satisfies at least one of the following:
the second frequency domain range is related to the first frequency domain range;
the second frequency domain range is equal to one or more resource pools of the terminal, and the one or more resource pools are pre-defined by a protocol or configured by a control node or pre-configured by the control node or configured by a terminal or pre-configured by a terminal; and
the second frequency domain range is obtained according to a preset rule, and the preset rule is pre-defined by a protocol or configured by the control node or pre-configured by the control node or configured by a terminal or pre-configured by a terminal.

9. The resource processing method according to claim 8, wherein
the second frequency domain range is same as the first frequency domain range; or
the second frequency domain range is of a size of a frequency domain range obtained by scaling the first frequency domain range by *N* times, and *N* is greater than 0.

10. The resource processing method according to claim 8, wherein
the second frequency domain range is a union or an intersection of multiple first frequency domain ranges.

11. The resource processing method according to claim 1, wherein the second frequency domain range is configured for at least one of the following granularities:
per resource pool;
per UE;
per CBR; and
per CR.

12. The resource processing method according to claim 1, further comprising:
receiving information or channels within the first frequency domain range or the second frequency domain range or a third frequency domain range, the third frequency domain range being less than or greater than the first frequency domain range, or the third frequency domain range being less than or greater than the second frequency domain range.

13. The resource processing method according to claim 12, wherein the information comprises at least one of feedback information, auxiliary information, control information, data information, discovery information and a reference signal; and the channels comprise at least one of a physical sidelink feedback channel (PSFCH), a physical sidelink control channel (PSCCH), a physical sidelink shared channel (PSSCH), and a physical sidelink discovery channel (PSDCH).

14. The resource processing method according to claim 12, wherein the information or channels satisfy at least one of the following:
a frequency domain range of resources of the information or channels and/or a size of sub-channels is pre-defined by a protocol or configured by a control node or pre-configured by the control node or configured by a terminal or pre-configured by a terminal;
the frequency domain range of resources of the information or channels is less than or equal to the first frequency domain range; and
the frequency domain range of resources of the information or channels is less than or equal to the second frequency domain range.

15. The resource processing method according to claim 12, wherein
the PSSCH corresponding to the channel is located within the first frequency domain range; and/or
the PSSCH corresponding to the channel is located within the second frequency domain range.

16. The resource processing method according to claim 15, wherein
the information or channels are located within a lowest sub-channel range of the corresponding PSSCH; or
the resources of the information or channels are determined according to the lowest sub-channel of the corresponding PSSCH and a frequency domain range of the corresponding PSSCH.

17. The resource processing method according to claim 1, further comprising:
receiving configuration information or control information transmitted within the first frequency domain range by a terminal or a network-side device.

18. A resource processing method, comprising:
transmitting, by a terminal, information or channels in a first frequency domain range or a second frequency domain range or a third frequency domain range, the third frequency domain range being less than or greater than the first frequency domain range, or the third frequency domain range being less than or greater than the second frequency domain range.

19. The resource processing method according to claim 18, wherein the information comprises at least one of feedback information, auxiliary information, control information, data information, discovery information and a reference signal; and the channels comprise at least one of a physical sidelink feedback channel (PSFCH), a physical sidelink control channel (PSCCH), a physical sidelink shared channel (PSSCH), and a physical sidelink discovery channel (PSDCH).

20. The resource processing method according to claim 18, wherein the information or channels satisfy at least one of the following:
a frequency domain range of resources of the information or channels or a size of sub-channels is pre-defined by a protocol or configured by a control node or pre-configured by the control node or configured by a terminal or pre-configured by a terminal;
the frequency domain range of resources of the information or channels is less than or equal to the first frequency domain range; and
the frequency domain range of resources of the information or channels is less than or equal to the second frequency domain range.

21. The resource processing method according to claim 18, wherein
the physical sidelink shared channel (PSSCH) corresponding to the channel is located within the first frequency domain range; and/or
the PSSCH corresponding to the channel is located within the second frequency domain range.

22. The resource processing method according to claim 21, wherein
the information or channels are located in a lowest sub-channel range of the corresponding PSSCH; or
the resources of the information or channels are determined according to the lowest sub-channel of the corresponding PSSCH and a frequency domain range of the corresponding PSSCH.

23. The resource processing method according to claim 21, wherein the terminal is configured to be at least one of the following:
receiving a power-saving indication signal of a network-side device or a transmitting terminal or a receiving terminal or a control terminal, which indicates a power-saving mode;
a source terminal type of a data packet is a pedestrian terminal (PUE), or a destination terminal type of the data packet is PUE; and
a terminal or PUE supporting a power-saving mode in a resource pool, or a resource pool being configured to be in a power-saving mode, or a resource pool for supporting at least one of pedestrian UE to vehicle UE (P2V), vehicle UE to pedestrian UE (V2P), pedestrian UE to pedestrian UE (P2P), and device to device (D2D) services.

24. The resource processing method according to claim 23, wherein the power-saving instruction signal is configured for at least one of the following granularities:
per resource pool;
per UE;
per UE type;
per QoS; and
per priority.

25. The resource processing method according to claim 18, further comprising:
skipping, by the terminal, transmitting the information in a case that at least one of the following is not satisfied:
a frequency domain range of resources of the information or channels or a size of sub-channels is pre-defined by a protocol or configured by a control node or pre-configured by the control node or configured by a terminal or pre-configured by a terminal;
the frequency domain range of resources of the information or channels is less than or equal to the first frequency domain range;
the frequency domain range of resources of the information or channels is less than or equal to the second frequency domain range;
the PSSCH corresponding to the channel is located within the first frequency domain range; and
the PSSCH corresponding to the channel is located within the second frequency domain range.

26. A resource processing method, comprising:
transmitting, by a terminal, configuration information or control information in a first frequency domain range in a case that a frequency domain range of resources reserved by the terminal overlaps with the first frequency domain range.

27. The resource processing method according to claim 26, wherein
The configuration information or control information is carried by at least one of the following:
a radio resource control (RRC) signal;
a media access control (MAC) control element (CE); and
sidelink control information (SCI).

28. The resource processing method according to claim 26, wherein the terminal is configured to be at least one of the following:
receiving a power-saving indication signal of a network-side device or a transmitting terminal or a receiving terminal or a control terminal, which indicates a power-saving mode;
supportable terminal types or terminal capabilities in a resource pool; and
a terminal or PUE supporting a power-saving mode in the resource pool, or a resource pool being configured to be in a power-saving mode, or a resource pool for supporting at least one of pedestrian UE to vehicle UE (P2V), vehicle UE to pedestrian UE (V2P), pedestrian UE to pedestrian UE (P2P), and device to device (D2D) services.

29. The resource processing method according to claim 28, wherein the power-saving instruction signal is configured for at least one of the following granularities:
per resource pool;
per UE;
per UE type;
per QoS; and
per priority.

30. A resource processing method, comprising:
indicating, by a network-side device, a terminal to transmit configuration information or control information in a first frequency domain range in a case that a frequency domain range of resources reserved or scheduled by the network-side device overlaps with the first frequency domain range.

31. The resource processing method according to claim 30, wherein the configuration information or control information is carried by at least one of the following:
a radio resource control (RRC) signal;
a media access control (MAC) control element (CE);
downlink control information (DCI); and
sidelink control information (SCI).

32. The resource processing method according to claim 30, further comprising:
transmitting, by the network-side device, a power-saving indication signal to the terminal to indicate that the terminal is in a power-saving mode.

33. The resource processing method according to claim 32, wherein the power-saving instruction signal is configured for at least one of the following granularities:
per resource pool;
per UE;
per UE type;
per QoS; and
per priority.

34. A resource processing apparatus, comprising:
a processing module, configured to perform detection in a first frequency domain range, and perform resource selection in the first frequency domain range and a second frequency domain range based on a detection result.

35. The resource processing apparatus according to claim 34, wherein the first frequency domain range is pre-defined by a protocol or configured by a control node or pre-configured by the control node or configured by a terminal or pre-configured by a terminal.

36. The resource processing apparatus according to claim 34, wherein the first frequency domain range satisfies at least one of the following:
a size and/or a location of the first frequency domain range is related to a location of a time domain unit and/or the index of time domain resources;
the size and/or the location of the first frequency domain range is related to radio resource control (RRC) configuration of a detection window;
a lowest sub-channel within the first frequency domain range is a lowest sub-channel of a resource pool;
a highest sub-channel within the first frequency domain range is a highest sub-channel of the resource pool;
a lowest physical resource block (PRB) of the lowest sub-channel within the first frequency domain range is a lowest PRB of the lowest sub-channel of the resource pool;
a highest PRB of the highest sub-channel within the first frequency domain range is a highest PRB of the highest sub-channel of the resource pool; and
the size of the first frequency domain range is scaling of a size of the resource pool, and a scaling factor is M being greater than 0.

37. The resource processing apparatus according to claim 34, wherein the first frequency domain range is configured for at least one of the following granularities:
per resource pool;
per terminal;
per channel busy rate (CBR);
per channel occupancy ratio (CR); and
per quality of service (QoS).

38. A resource processing apparatus, comprising:
a first transmitting module, configured to transmit information or channels in a first frequency domain range or a second frequency domain range or a third frequency domain range, the third frequency domain range being less than or greater than the first frequency domain range, or the third frequency domain range being less than or greater than the second frequency domain range.

39. The resource processing apparatus according to claim 38, wherein
a PSSCH corresponding to the channel is located within the first frequency domain range; and/or
the PSSCH corresponding to the channel is located within the second frequency domain range.

40. A resource processing apparatus, comprising:
a second transmitting module, configured to transmit, by a terminal, configuration information or control information in a first frequency domain range in a case that a frequency domain range of resources reserved by the terminal overlaps with the first frequency domain range.

41. The resource processing apparatus according to claim 40, wherein the terminal is configured to be at least one of the following:
receiving a power-saving indication signal of a network-side device or a transmitting terminal or a receiving terminal or a control terminal, which indicates a power-saving mode;
supportable terminal types or terminal capabilities in a resource pool; and
a terminal or PUE supporting a power-saving mode in a resource pool, or a resource pool being configured to be in a power-saving mode, or a resource pool for supporting at least one of pedestrian UE to vehicle UE (P2V), vehicle UE to pedestrian UE (V2P), pedestrian UE to pedestrian UE (P2P), and device to device (D2D) services.

42. A resource processing apparatus, comprising:
a third transmitting module, configured to indicate a terminal to transmit configuration information or control information in a first frequency domain range in a case that a frequency domain range of resources reserved or scheduled by a network-side device overlaps with the first frequency domain range.

43. The resource processing apparatus according to claim 42, wherein
the third transmitting module is further configured to transmit a power-saving indication signal to the terminal to indicate that the terminal is in a power-saving mode.

44. An electronic device, comprising a processor, a memory and a program or an instruction stored in the memory and executable on the processor, wherein when the program or the instruction is executed by the processor, the steps of the method according to any one of claims 1 to 33 are implemented.

45. A readable storage medium, the readable storage medium storing a program or an instruction, wherein when the program or the instruction is executed by a processor, the steps of the method according to any one of claims 1 to 33 are implemented.

46. A chip, comprising a processor and a communication interface, wherein the communication interface is coupled with the processor, and the processor is configured to run a program or an instruction to implement the steps of the method according to any one of claims 1 to 33.

47. A computer program product, wherein the program product is stored in a nonvolatile storage medium, and when the program product is executed by at least one processor, the steps of the method according to any one of claims 1 to 33 are implemented.
